# EUROPÄISCHE PATENTSCHRIFT

(11) **EP 4 334 013 B1**
(45) Veröffentlichungstag und Bekanntmachung des Hinweises auf die Patenterteilung: **16.09.2026**
(21) Anmeldenummer: 22733342.4
(22) Anmeldetag: 07.06.2022
(51) Int. Cl.: B01D 29/23, B01D 29/68

(54) **FILTERVORRICHTUNG**
FILTER APPARATUS
APPAREIL DE FILTRATION

(30) Priorität: 24.08.2021 DE 102021004351
(43) Veröffentlichungstag der Anmeldung: 13.03.2024
(73) Patentinhaber: Hydac Process Technology GmbH, 66538 Neunkirchen (DE)
(72) Erfinder: LINGEN, Hans-Jürgen, 41069 Mönchengladbach (DE); KLEIN, Raphael, 57250 Netphen (DE); HRIN, Sebastian, 50189 Elsdorf (DE)
(74) Vertreter: Bartels und Partner, Patentanwälte
(86) Internationale Anmeldenummer: PCT/EP2022/065381
(87) Internationale Veröffentlichungsnummer: WO 2023/025425

(56) Entgegenhaltungen:
- DE-A1- 3 611 075
- DE-U1- 202014 104 200
- DE-U1- 202016 003 089

## Beschreibung

Die Erfindung betrifft eine Filtervorrichtung, zumindest bestehend aus
- einem Filter, der in einzelne Filtersegmente unterteilt ist;
- einer Abreinigungseinrichtung, die jedem Filtersegment zugeordnet eine entlang desselben verfahrbare Teilreinigungseinheit aufweist, die mit einer drehbaren Abfuhreinrichtung mit einzelnen Abfuhröffnungen zusammenwirkt, die mit Durchlassstellen in der Abreinigungseinrichtung in zumindest teilweise Deckung gebracht der Abfuhr eines Fluidstroms aus dem Filter dient; und
- einer Steuereinrichtung, die zumindest eine Teilreinigungseinheit für die Abreinigung aktiviert, wohingegen mindestens eine weitere Teilreinigungseinheit im Rahmen dieser Abreinigung inaktiv bleibt.

Durch DE 42 08 743 C2 ist ein automatischer Rückspülfilter für Flüssigkeiten bekannt, bestehend aus einem Filtergehäuse mit einem Einlass und einem Filtratauslass sowie einem Schlammaustrag, in den mindestens eine oder mehrere, koaxial übereinander an einer hohlen Antriebswelle als Abreinigungseinrichtung angeordnete Mehrkammerdüsen als Teilreinigungseinheiten in einem zylindrischen Filtereinsatz rotieren, der als Filter dient und der funktionsmäßig betreffend die Rückspülung in einzelne Filtersegmente unterteilt ist. Die bekannte Lösung weist des Weiteren ein als Abfuhreinrichtung dienendes Steuerrohr auf, das sich zwangsweise mit unterschiedlichen Drehzahlen zur Mehrkammerdüse dreht, wobei hierdurch deren einzelne Kammern langsam derart angesteuert werden, dass eine bisherige als Passivkammer dienende Mehrkammerdüse aktiviert und gleichzeitig die vorherige Aktivkammer verschlossen wird, wobei dabei der Rückspülvorgang zyklisch fortgesetzt wird, bis alle Kammern aktiv geschaltet waren.

Dadurch, dass das Steuerrohr sich kontinuierlich gleichsinnig und koaxial in der Abreinigungseinrichtung mit den Mehrkammerdüsen dreht, beide zusammen im Filtereinsatz koaxial gelagert sind, und der Antrieb für die Abreinigungs- und die Abfuhreinrichtung ein gemeinsamer ist, sind der Rückspülvolumenstrom, der absolute Druckabfall sowie der Druckabfall je Zeiteinheit derart verringert, dass die Rückspülvorgänge im Wesentlichen mit hoher Intensität durchgeführt werden können.

Die bekannte Lösung benötigt einen eigenständigen Drehantrieb sowohl für die Abreinigungseinrichtung als auch für die Abfuhreinrichtung mit jeweils einer eigenständigen Zahnradgetriebestufe, die jedoch gemeinsam von einem einzelnen Rotationsantrieb betätigbar sind, was zum einen entsprechenden Bauraum benötigt, und aufgrund des zu steuernden Zahnradtriebs wird viel Antriebsenergie seitens des Rotationsantriebs regelmäßig in Form eines Elektromotors benötigt.

Die DE 36 11 075 A1 beschreibt eine Filtervorrichtung, zumindest bestehend aus
- einem Filter, der in einzelne Filtersegmente unterteilt ist;
- einer Abreinigungseinrichtung, die jedem Filtersegment zugeordnet eine entlang desselben verfahrbare Teilreinigungseinheit aufweist, die mit einer drehbaren Abfuhreinrichtung mit einzelnen Abfuhröffnungen zusammenwirkt, die mit Durchlassstellen in der Abreinigungseinrichtung in zumindest teilweise Überdeckung gebracht der Abfuhr eines Fluidstroms aus dem Filter dient; und
- einer Steuereinrichtung, die zumindest eine Teilreinigungseinheit für die Abreinigung aktiviert, wohingegen mindestens eine weitere Teilreinigungseinheit im Rahmen dieser Abreinigung inaktiv bleibt.

Weitere Filtervorrichtungen gehen aus der DE 20 2016 003 089 U1 und der DE 20 2014 104 200 U1 hervor.

Ausgehend von diesem Stand der Technik liegt der Erfindung die Aufgabe zugrunde, die bekannte Filtervorrichtung dahingehend weiter zu verbessern, dass ein platzsparender Aufbau bei energieeffizientem Antrieb und eine verbesserte Abreinigung erreicht ist. Eine dahingehende Aufgabe löst eine Filtervorrichtung mit den Merkmalen des Patentanspruchs 1 in seiner Gesamtheit.

Dadurch, dass gemäß dem kennzeichnenden Teil des Patentanspruchs 1 die Steuereinrichtung eine Kupplungseinrichtung aufweist, durch die in einer Stellung der Kupplungseinrichtung die Abreinigungseinrichtung und die Abfuhreinrichtung für eine gemeinsame Drehbewegung miteinander verbindbar und in einer anderen Stellung der Kupplungseinrichtung voneinander trennbar sind, kommt die erfindungsgemäße Lösung ohne Übersetzungsgetriebe aus, was einen platzsparenden Aufbau ermöglicht. Hierzu trägt mit bei, dass die angesprochene Kupplungseinrichtung in koaxialer Anordnung zu der jeweils rohrförmigen Abreinigungseinrichtung und Abfuhreinrichtung, die drehbar in der Abreinigungseinrichtung geführt ist, und an diesen beiden angreifend im Inneren des insoweit korbartig ausgestalteten Filters platzsparend untergebracht ist. Des Weiteren erlaubt die Kupplungseinrichtung ein zeitnahes Ansteuern sowohl der Abreinigungseinrichtung als auch der Abfuhreinrichtung, so dass in energieeffizienter Weise die Abreinigung insgesamt verbessert ist. Die kostengünstig realisierbare Kupplungslösung sieht dabei bevorzugt vor, dass in der gekuppelten Stellung die Abreinigungseinrichtung von der Abfuhreinrichtung mit angetrieben wird und dass in der entkuppelten Stellung die Abreinigungseinrichtung in ihrer letzten Position verbleibt und nur die Abfuhreinrichtung permanent weiter angetrieben wird.

Ein großer Vorteil der Steuereinrichtung mit Kupplungslösung besteht also darin, dass die Abfuhreinrichtung permanent antreibbar ist, wohingegen die Abreinigungseinrichtung durch die Kupplung nur zeitweise angetrieben wird. Demgegenüber besteht aber auch ohne Weiteres die Möglichkeit in umgekehrter Abfolge, die Abreinigungseinrichtung permanent und die Abfuhreinrichtung durch die Kupplung nur zeitweise anzutreiben, so dass je nach Anwendungsfall hier beide Antriebskonzepte realisierbar sind. Darüber hinaus besteht die Möglichkeit, die Kupplungseinrichtung sowohl auf der Oberseite als auch auf der Unterseite der Rückspüleinrichtung an der Filtervorrichtung vorzusehen, so dass ein modulares Aufbaukonzept realisierbar ist. Dies hat so keine Entsprechung im Stand der Technik.

Bei einer weiteren bevorzugten Ausführungsform der erfindungsgemäßen Filtervorrichtung ist vorgesehen, dass die Kupplungseinrichtung als ein Steuerteil eine Klauenkupplung aufweist, deren Klauen in gekuppelter Stellung, mit Ausnehmungen in der Abreinigungseinrichtung in Eingriff sind und in der ausgekuppelten Stellung außer Eingriff gebracht sind. Dergestalt ist eine Formschlussverbindung im Rahmen der Kupplung erreicht, was ein schonendes Kuppeln und Entkuppeln zwischen der Abreinigungseinrichtung und der Abfuhreinrichtung ermöglicht.

Vorzugsweise weist dabei die Steuereinrichtung ein weiteres Steuerteil auf, das Bestandteil der Abfuhreinrichtung ist und das derart mit einer Steuerbahn der Kupplungseinrichtung zusammenwirkt, dass bei einer Drehbewegung der Abfuhreinrichtung die Kupplungseinrichtung in die ausgekuppelte Stellung kommt, indem sie von der Abreinigungseinrichtung in eine abgehobene Stellung gebracht ist. Dabei wird vorzugsweise die Verfahrbewegung der Kupplungseinrichtung in die abgehobene Stellung von einem Energiespeicher unterstützt, so dass ein hemmnisfreier Betrieb für die Kupplung erreicht ist.

Bei einer weiteren bevorzugten Ausführungsform der erfindungsgemäßen Filtervorrichtung ist vorgesehen, dass die Teilreinigungseinheiten in einer Längsachse der Abreinigungseinheit übereinander angeordnet sind und die mit ihrem einen freien Ende entlang den Filtersegmenten verfahrbar sind und mit ihrem anderen freien Ende in die jeweils zugeordneten Durchlassstellen der zumindest teilweise als Hohlrohr konzipierten Abreinigungseinrichtung ausmünden. Die Filtersegmente können dabei einzelne Teileinheiten eines Filtertopfes bilden. Bevorzugt ist jedoch der Filtertopf durchgehend einstückig ausgebildet und der Aufbau nach Filtersegmenten ergibt sich nur durch die Funktion der Abreinigungseinrichtung mit ihren einzelnen Teilreinigungseinheiten, die insoweit jeweils segmentweise den Filtertopf innenumfangseitig überfahren.

Bei einer weiteren besonders bevorzugten Ausführungsform der erfindungsgemäßen Filtervorrichtung ist vorgesehen, dass in dem Hohlrohr der Abreinigungseinrichtung ein weiteres Hohlrohr als Teil der Abfuhreinrichtung geführt ist, deren Abfuhröffnungen über den Umfang des weiteren Hohlrohres derart verteilt sind, dass in Hintereinanderabfolge jeweils eine Durchlassstelle mit einer Abfuhröffnung unter Bildung eines Fluiddurchlasses in Deckung gebracht ist, wohingegen die weiteren möglichen Fluiddurchlässe zumindest teilweise, vorzugsweise alle, abgesperrt sind. Durch diese Segmentierung der sich in Rückspülung befindlichen Filterfläche wird die Rückspülintensität erhöht. Die vorhandene "Rückspülenergie" wird insoweit auf eine kleine Filterfläche konzentriert, was zum einen zur Folge hat, dass mit diesem System eine feinere Filtration ermöglicht ist, und zum anderen dieses System mit einer geringeren Rückspülmenge auskommen kann, was der Umwelt zugutekommt.

Bei einer weiteren bevorzugten Ausführungsform der erfindungsgemäßen Filtervorrichtung ist vorgesehen, dass die Steuerbahn der Kupplungseinrichtung zur Ansteuerung der Teilreinigungseinheiten in einzelne Bahnsegmente unterteilt ist, so dass im gekuppelten Zustand immer zumindest ein Fluiddurchlass aktiviert und nach Durchlaufen eines Entkupplungs-Kupplungs-Zyklusses zumindest ein anderer Fluiddurchlass aktiviert ist und die jeweils weiteren Fluiddurchlässe deaktiviert sind.

Dabei ist vorzugsweise ferner vorgesehen, dass die Steuereinrichtung ein weiteres drittes Steuerteil aufweist, das als Druckstück ausgebildet entgegen der Wirkung des Energiespeichers die Kupplungseinrichtung in ihrer gekuppelten Stellung hält, und mit einem Bahnsegment der Kupplungseinrichtung derart zusammenwirkt, dass entlang eines Bogensegmentes das Druckstück außer Funktion gesetzt, den Entkupplungsvorgang ermöglicht. Ein sich hieraus ergebender Winkelversatz zwischen der Abfuhreinrichtung und der Abreinigungseinrichtung bei einem Schalt- oder Kupplungsvorgang entspricht dem vorgebbaren Teilungswinkel der über der rohrförmigen Abfuhreinrichtung verteilten Abfuhröffnungen, so dass insoweit die Segmente der Rückspüleinheit nacheinander aktiviert sind.

Vorzugsweise ist dabei vorgesehen, dass die Länge des im Eingriff mit dem Druckstück befindlichen Bogensegmentes derart bemessen ist, dass im gekuppelten Zustand der Kupplungseinrichtung der in der Abreinigungsfolge vorgesehene Fluiddurchlass zwischen der Abreinigungseinrichtung und der Abfuhreinrichtung zustande kommt.

Bei einer besonders bevorzugten Ausführungsform der erfindungsgemäßen Filtervorrichtung ist weiter vorgesehen, dass es bei einem Umschaltvorgang zwischen ge- und entkuppeltem Zustand der Kupplungseinrichtung zu einer Relativbewegung zwischen der Abreinigungs- und der Abfuhreinrichtung kommt, während die Abfuhreinrichtung weiter rotiert. Die radiale Abfuhröffnung der Abfuhreinrichtung kann in Drehrichtung gesehen länger ausgeführt sein als die jeweils zuordenbare Durchlassstelle in der Abreinigungseinrichtung. Dergestalt ist eine vorgebbare Winkelüberschneidung erreicht, wodurch sichergestellt ist, dass das jeweils in der Rückspülung befindliche Filtersegment während der Relativbewegung zwischen den beiden Einrichtungen auch weiterhin abgereinigt wird. Insoweit ist auch sichergestellt, dass das rückgespülte Filtersegment über 360° hinweg und damit vollständig eine Abreinigung erfährt.

Nachstehend ist die Erfindung anhand eines Ausführungsbeispieles nach der Zeichnung näher erläutert. Dabei zeigen in prinzipieller, nicht maßstäblicher Darstellung:
- Fig. 1 bis 3: einen zentralen Längsschnitt durch die Filtervorrichtung in verschiedenen Betätigungsstellungen, wobei die Fig. 2 und 3 nur ausschnittsweise die Filtervorrichtung nach der Fig. 1 wiedergeben; und
- Fig. 4 bis 7: verschiedene Darstellungen einer Steuereinrichtung bezogen auf eine in den Fig. 1 bis 3 eingesetzte Kupplungseinrichtung.

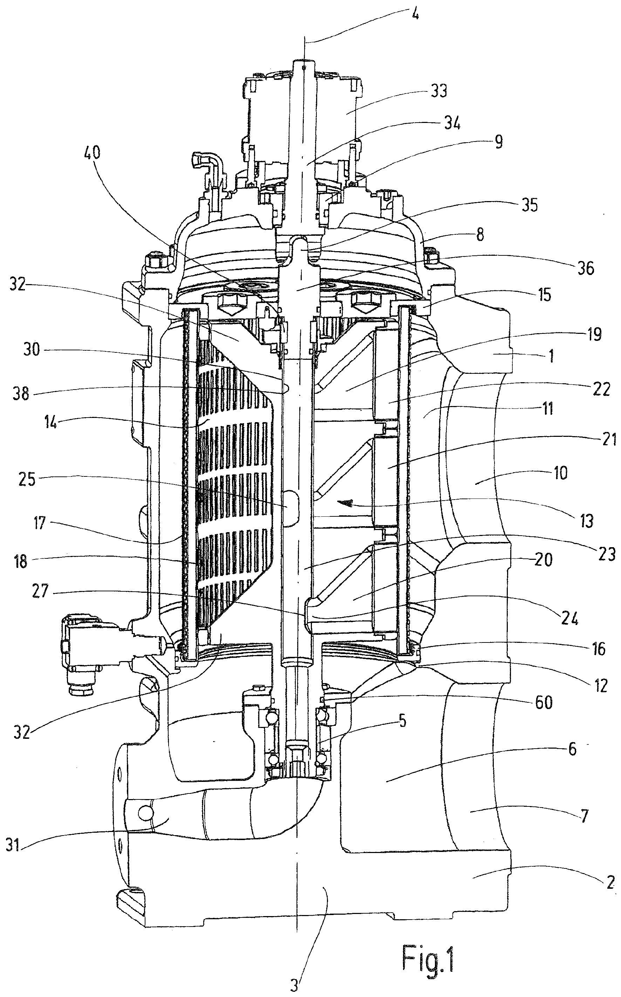

Die Fig. 1 zeigt ein Ausführungsbeispiel der erfindungsgemäßen Filtervorrichtung mit einem als Ganzes mit 1 bezeichnetem Filtergehäuse, das ein Gehäusehauptteil 2 in Form eines Topfes besitzt, an dessen Boden 3 sich eine zu einer zentralen Gehäuselängsachse 4 koaxiale Lagerstelle 5 befindet. Als Zugang zum an den Boden 3 angrenzenden Gehäuseraum 6 ist ein seitlicher Einlass 7 für die Zufuhr von Unfiltrat vorgesehen, so dass der Gehäuseraum 6 die Unfiltratseite bildet. An der Oberseite ist das Gehäusehauptteil 2 durch einen mittels Halteschrauben abnehmbar angebrachten Gehäusedeckel 8 geschlossen, in dem wie im Boden 3 eine zur Achse 4 koaxiale Lagerstelle 9 gebildet ist. Im Gehäusehauptteil 2 ist benachbart dem Gehäusedeckel 8 gegenüberliegend ein Filtratauslass 10 vorgesehen, der in zum seitlichen Einlass 7 fluchtender Position angeordnet ist und über den Filtrat aus dem angrenzenden Gehäuseraum 11 ausströmt, der im Betrieb die Rein- oder Filtratseite bildet. Im Gehäusehauptteil 2 ist oberhalb eines eine Stufe bildenden Wandabsatzes 12 der sich in der Nähe des Unfiltrateinlasses 7 befindet eine als Ganzes mit 13 bezeichnete Rückspülfilter-Baueinheit angeordnet, die im Folgenden noch näher beschrieben werden wird.

Die Baueinheit 13 weist einen Filter 14 in Form eines Filterkorbes auf, der an seinen freien Stirnseiten jeweils in einer Endkappe 15 und 16 aufgenommen ist. Mittels den Endkappen 15 und 16 ist der Filter 14 im Filtergehäuse 1 gelagert und nach Entfernen des Gehäusedeckels 8 kann der Filter 14 aus dem Gehäuse 1 entfernt werden. Das Filtermaterial des Filters 14 ist zwischen Stützkörpern 17 und 18 aufgenommen, wobei die Fluid-Durchlassstellen des inneren Stützkörpers 18 aus schlitzförmigen Fensteröffnungen eines ansonsten durchgehend ausgebildeten zylindrischen Stützkörpers gebildet sind. Das Filtermedium des Filters 14 besteht vorzugsweise aus einer plissierten Filtermattenbahn, bestehend aus zumindest einer Filterlage.

Der Filter 14 ist in einzelne Filtersegmente funktionsmäßig unterteilt und die Baueinheit 13 weist eine Abreinigungseinrichtung 19 auf, die jedem Filtersegment zugeordnet eine entlang desselben verfahrbare Teilreinigunseinheit 20, 21 und 22 aufweist, die mit einer drehbaren Abfuhreinrichtung 23 mit einzelnen Abfuhröffnungen 24, 25 und 26 zusammenwirkt, die mit fluiddurchlässigen Durchlassstellen 27, 28 und 29 in der Abreinigungseinrichtung 19 zumindest teilweise in Überdeckung gebracht, der Abfuhr eines Fluidstromes aus dem Filter 14 dient. Jede Teilreinigungseinheit 20, 21 und 22 bildet an ihrer freien Stirnseite eine Art Schlitzdüse aus, die mittels eines Spülarms 30 als Teil der Abreinigungseinrichtung 19 in Form eines Hohlrohres entlang der Innenumfangsseite des Filters 14 drehbar angeordnet ist. Im Rahmen der Partikelfiltration wird der Filter 14 von innen nach außen durchströmt und lagert dabei auf seiner Innenseite die aus dem Fluid abgereinigte Partikelverschmutzung ab. Durch Filtratdruck im Gehäuseraum 11 auf der Rein- oder Filtratseite wird dergestalt die abgelagerte Partikelverschmutzung in die jeweilige Schlitzdüse einer Teilreinigungseinheit 20, 21 und 22 von außen nach innen rückgespült und gelangt über den hohlen Spülarm 30 unter Durchgriff der unteren Lagerstelle 5 auf die sogenannte Schlammablassseite 31, die gegenüberliegend zum Gehäuseraum 6 von der Bodenseite her in das Gehäusehauptteil 2 eingreift. Insoweit ist das Hohlrohr des Spülarms 30 mit der Schlammablassseite 31 bodenseitig medienführend verbunden.

Wie sich weiter aus der Fig. 1 ergibt, sind alle Teilreinigungseinheiten 20, 21 und 22 mit ihrer jeweiligen, der inneren Stützkörperseite 18 des Filters 14 zugewandten und anliegenden Schlitzdüse, in vertikaler Übereinanderanordnung am Spülarm 30 deckungsgleich angebracht. Für eine verbesserte Umlaufführung dieser Teilreinigungseinheiten 20, 21 und 22 ist auf gegenüberliegenden Seiten des Spülarms 30 nach oben und unten hin diametral gegenüberliegend jeweils ein Ausgleichsarm 32 angebracht. Zum umlaufenden Antrieb der Einrichtungen 19 und 23 dient ein Elektromotor 33, dessen Abtriebswelle 34 über eine Zapfenverbindung 35 die Abfuhreinrichtung 23 über eine mit ihr verbundene Antriebswelle 36 permanent antreibt. Innerhalb des hohlen Spülarmes 30 ist hierfür die Abfuhreinrichtung 23 mit ihren Abfuhröffnungen 24, 25 und 26 geführt, die drehbar im hohlen Spülarm 30 angeordnet eine Art Schaltrohr 38 im Zusammenwirken mit einer als Ganzes mit 40 bezeichneten Steuereinrichtung ausbildet.

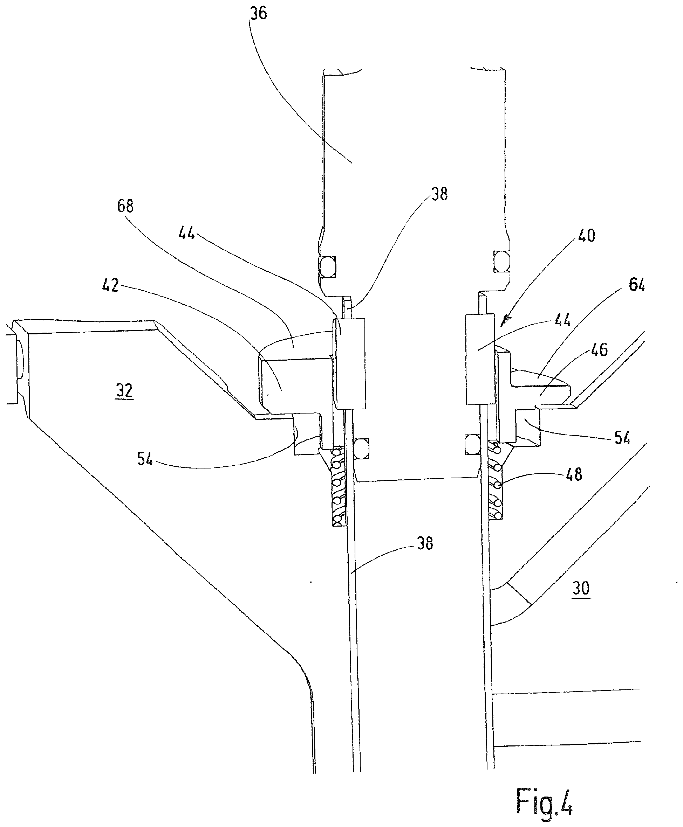

Wie insbesondere die Schnittdarstellung nach der Fig. 4 zeigt, wird die Abtriebswelle 34 seitens des Elektromotors 33 permanent angetrieben und rotiert dauerhaft. Demgemäß rotiert auch die Antriebswelle 36 für die Abfuhreinrichtung 23 dauerhaft. Das zugehörige Schaltrohr 38, vorzugsweise aus einem Rohrstück aus Präzisionsstahlrohr gebildet, ist über eine SpielPassung im Spülarm 30 frei drehbar gelagert. Das Schaltrohr 38 ist mit der Antriebswelle 36 über zwei einander diametral zur Längsachse 4 gegenüberliegende Passfederstücke 44 fest verbunden und rotiert somit auch dauerhaft mit Betrieb des Elektromotors 33 mit. Die beiden Passfederstücke 44 ragen radial gemäß der Darstellung nach der Fig. 4 durch das Schaltrohr 38 seitlich hindurch und bieten eine axiale Führung für eine Schaltbuchse 46 als Teil einer Kupplungseinrichtung 42 unter Bildung einer Art Schiebesitz, die wesentlicher Teil der Steuereinrichtung 40 ist. Die ringförmige Schaltbuchse 46, die mit einer Mittenöffnung das Schaltrohr 38 umfasst, ist insoweit auf dem Schaltrohr 38 zentriert und über die beiden Passfederstücke 44 im tangentialen Formschluss zum Schaltrohr 38 respektive zu der Antriebswelle 36 gehalten. Durch die dahingehende Passfederführung rotiert die Schaltbuchse 46 bei Betrieb des Elektromotors 33 dauerhaft. Eine in Blickrichtung auf die Fig. 4 gesehen unterhalb der Schaltbuchse 46 angeordnete Druckfeder 48 bildet den Energiespeicher für die Kupplungseinrichtung 42 als Ganzes und übt eine nach oben gerichtete Kraft auf die Schaltbuchse 46 aus. Dabei ist die Druckfeder 48 mit ihrem einen freien Ende in einer Ausnehmung im Spülarm 30 angeordnet und stützt sich mit ihrem gegenüberliegenden anderen freien Ende an einer absatzartigen Verlängerung der ringförmigen Schaltbuchse 46 ab. Anstelle eines Elektromotors 33 kann auch ein hydraulischer Antriebsmotor treten.

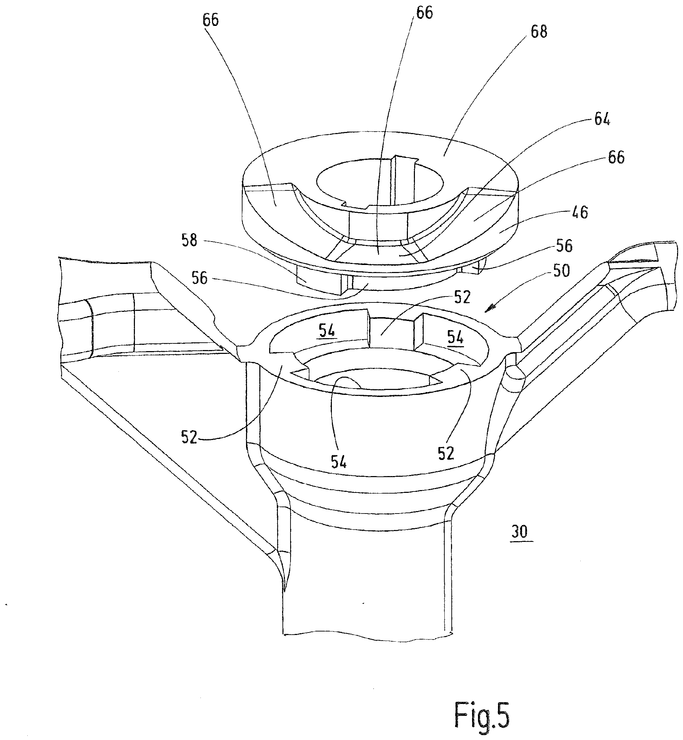

Wie sich aus der Fig. 5 des Weiteren ergibt, bilden die Konturen auf der Oberseite des Spülarmes 30 und auf der Unterseite der Schaltbuchse 46 mit der vorgesehenen axialen Bewegbarkeit der Schaltbuchse 46 entlang der Längsachse 4 eine schaltbare Klauenkupplung 50 als Ganzes aus, die als ein Steuerteil der Kupplungseinrichtung 42 anzusehen ist, wobei das weitere Steuerteil der Steuereinrichtung 40 respektive der Kupplungseinrichtung 42 die Passfederstücke 44 sind, die den Schiebesitz für die Schaltbuchse 46 bilden. Unter Bildung der Klauenkupplung 50 weist der Spülarm 30 der Abreinigungseinrichtung 19 auf seiner Oberseite eine topfartige Vertiefung mit einzelnen Stegen 52 auf, die zwischen sich in radialer Richtung gesehen Ausnehmungen 54 begrenzen, die der Aufnahme von klauenartigen Vorsprüngen 56 dienen, die auf der Unterseite der Schaltbuchse 56 vorstehen, und die zwischen sich nach innen eingerückte Radialsegmente 58 aufweisen, in die in der gekuppelten Stellung der Klauenkupplung 50 die Stege 52 eingreifen.

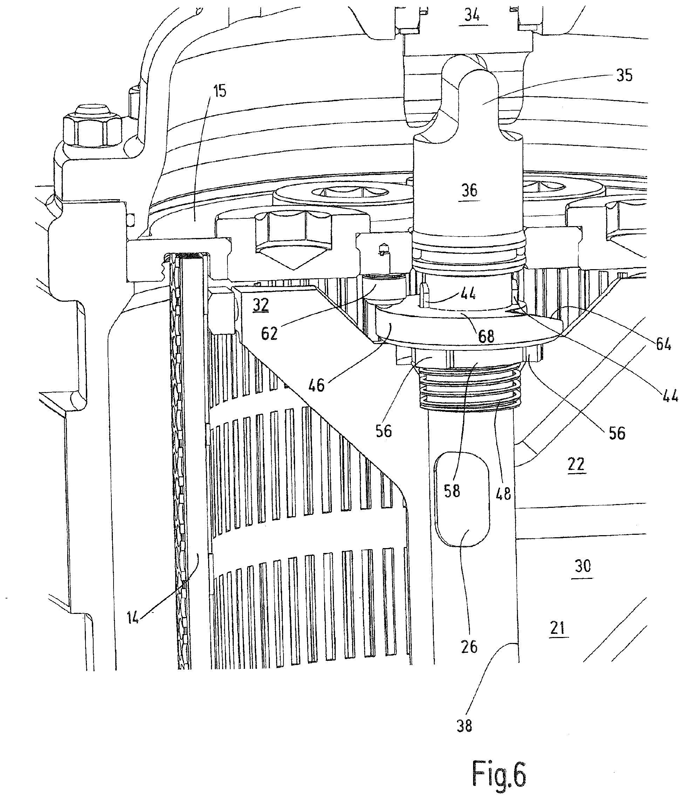

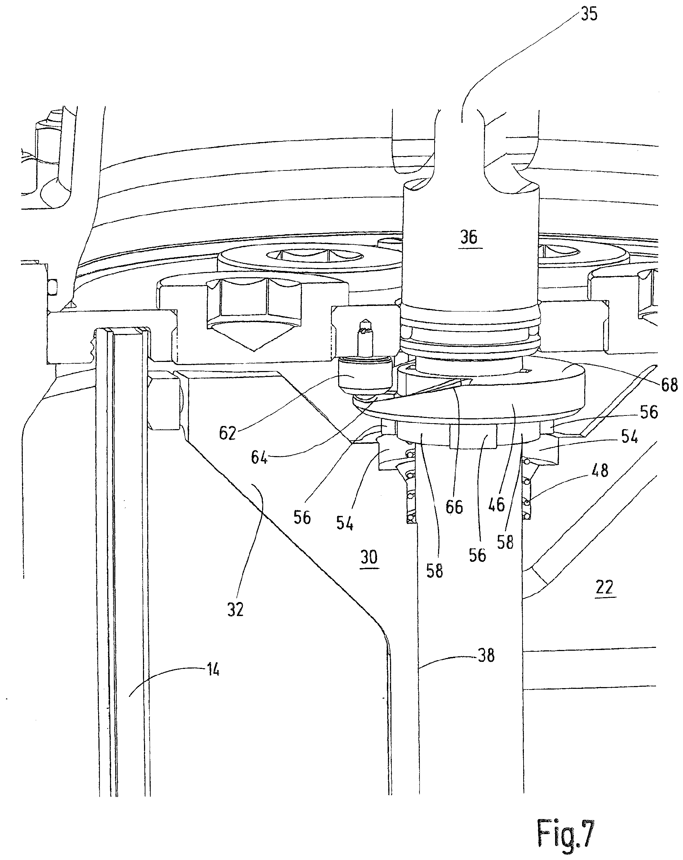

Befindet sich die Schaltbuchse 46 im Formschluss mit dem Spülarm 30 gemäß der Darstellung nach der Fig. 6, ist die Kupplungseinrichtung 42 respektive die Klauenkupplung 50 eingerückt beziehungsweise geschaltet und der Spülarm 30 wird über die Schaltbuchse 46 angetrieben. Ist die Schaltbuchse 46 hingegen axial unter der Wirkung der Druckfeder 48 nach oben verschoben und nicht im Formschluss mit dem Spülarm 30, ist gemäß der Darstellung nach der Fig. 7 die Kupplungseinrichtung 42 ausgerückt beziehungsweise nicht geschaltet und die Schaltbuchse 46 rotiert mit dem Schaltrohr 38 weiter, während der Spülarm 30 stehen bleibt. Um ein ungewolltes Mitnehmen durch Reibschluss im Inneren der Passung zu vermeiden, ist gemäß der Darstellung nach der Fig. 1 ein O-Ring 60 an der Unterseite des Spülarmes 30 im Bereich oberhalb der unteren Lagerstelle 5 vorgesehen, der insoweit ein konstantes Bremsmoment am Spülarm 30 hervorruft. Wie sich des Weiteren aus den Fig. 6 und 7 ergibt, ist im Rahmen der Steuereinrichtung 40 ein weiteres drittes Steuerteil in Form eines Druckstückes 62 vorhanden, das entgegen der Wirkung der Druckfeder 48 von oben her eine Kraft auf die Schaltbuchse 46 ausüben kann. So zeigen die Fig. 6 und 7 insbesondere das Zusammenspiel des Druckstückes 62 in Form einer Kugelrolle mit der Druckfeder 48 sowie der Schaltbuchse 46, wobei die Fig. 6 den eingerückten Kupplungszustand wiedergibt und die Fig. 7 den ausgerückten Zustand. Gemäß der Darstellung nach der Fig. 6 wird die Schaltbuchse 46 durch die Druckfeder 48 nach oben gedrückt, wobei sich die Oberseite der Schaltbuchse 46 gegen die Kugelrolle des Druckstückes 42 abstützt, die als Einschraubteil konzipiert fest mit der oberen Endkappe 15 verbunden ist. In dem insoweit in der Fig. 6 dargestellten Zustand ist die Klauenkupplung 50 im Eingriff, so dass die Schaltbuchse 46 und der Spülarm 30 gemeinsam miteinander rotieren, wobei die Schaltbuchse 46 über die Passfederstücke 44, wie bereits dargelegt, das Schaltrohr 38 in der Drehbewegung mitnimmt.

Wie sich des Weiteren insbesondere aus der Fig. 5 ergibt, weist die Kontur auf der Oberseite der Schaltbuchse 46 eine Mulde 64 auf, die in einzelne Bogensegmente 66 unterteilt ist, wobei das mittlere Bogensegment 66 die tiefste Stelle der Mulde 64 bildet und die beiden anderen Bogensegmente 66 Anfahrrampen für das axial unbewegliche Druckstück 62 ausbilden, die ausgehend von dem mittleren Bogensegment 66 nach außen hin in ein weiteres Bogensegment 68 ausmünden, das eine horizontale Fläche quer zur Längsachse 4 ausbildet und insoweit die höchste Anfahrstelle für das Druckstück 62 innerhalb der Schaltbuchse 46 ausbildet. Insoweit geht also die Mulde 64 über die genannten Schrägen 66 in den zylindrischen Bereich 68 der Schaltbuchse 46 über. In dem Winkelbereich der Mulde 64 mit dem zutiefst liegenden Bogensegment 66 wird die Schaltbuchse 46 durch die Druckfeder 48 axial nach oben bewegt und die Klauenkupplung 50 ist dann gemäß der Darstellung nach der Fig. 7 ausgerückt. Dies hat zur Folge, dass der Spülarm 30 steht; das Schaltrohr 38 rotiert jedoch weiter und es entsteht ein relativer Winkelversatz zwischen Spülarm 30 und Schaltrohr 38. Wird die Schaltbuchse 46 gemäß der Darstellung nach der Fig. 6 durch das Druckstück 62 wieder nach unten bewegt, so schaltet die Klauenkupplung 50 erneut und es kommt, wie vorstehend beschrieben, zum angestrebten Formschluss. Der Winkelversatz zwischen dem Schaltrohr 38 und dem Spülarm 30 im Rahmen eines Schaltvorganges entspricht dem Teilungswinkel der einzelnen radial versetzt zueinander angeordneten Abfuhröffnungen 24, 25 und 26 im Schaltrohr 38 als innerem Bestandteil der Abreinigungseinrichtung 23 mit den zugeordneten Durchlassstellen 27, 28 und 29. Somit können die einzelnen Segmente der Rückspüleinheit 10 nacheinander aktiviert werden, was im Folgenden noch näher erläutert werden wird.

Während im Stand der Technik (DE 10 2017 001 968 A1) alle übereinander angeordneten Teilreinigungseinheiten zeitgleich und gemeinsam für die Rückspülung verwendet werden, sieht die erfindungsgemäße Lösung immer nur den Einsatz einer Teilreinigungseinheit vor, und im Rahmen einer verbesserten Rückspülung sind die beiden anderen Teilreinigungseinheiten von der Rückspülung ausgenommen. Es versteht sich, dass nicht nur drei Teilreinigungseinheiten 20, 21 und 22 zum Einsatz kommen können gemäß dem hier vorgestellten Ausführungsbeispiel, sondern dass die vorliegende Lösung auch mit nur zwei Teilreinigungseinheiten funktioniert oder mit einer größeren Anzahl von mehr als drei Teilreinigungseinheiten, was sich insbesondere anbietet, sofern der Filterkorb eine größere axiale Baulänge aufweist als die gezeigte Lösung nach den Fig. 1 bis 3.

So zeigt die segmentierte Aufbaulösung der Rückspülfilter-Baueinheit 13 nach der Fig. 1 die Rückspülung über das untere aktiv gehaltene Segment. Insoweit ist also die Rückspüleinheit 13 in axialer Richtung in einzelne Segmente unterteilt, wobei pro Umdrehung der Rückspüleinheit 13 immer nur ein Segment durchströmt wird; gemäß der Darstellung nach der Fig. 1 das untere Segment, wobei hierbei unter Bildung eines Fluiddurchlasses die untere Abfuhröffnung 24 der Abfuhreinrichung 23 in Deckung ist mit der unteren Durchlassstelle 27 der Abreinigungseinrichtung 19. Die sonstigen Abfuhröffnungen und Durchlassstellen von Schaltrohr 38 und Spülarm 30 sind jeweils um 120 Grad radial versetzt zueinander angeordnet und sind demgemäß für die Rückspülung nicht verwendbar, weil die Rohrwandung der Abreinigungseinrichtung 19 die Abfuhröffnungen 25, 26 der Abfuhreinrichtung 23 überdeckt.

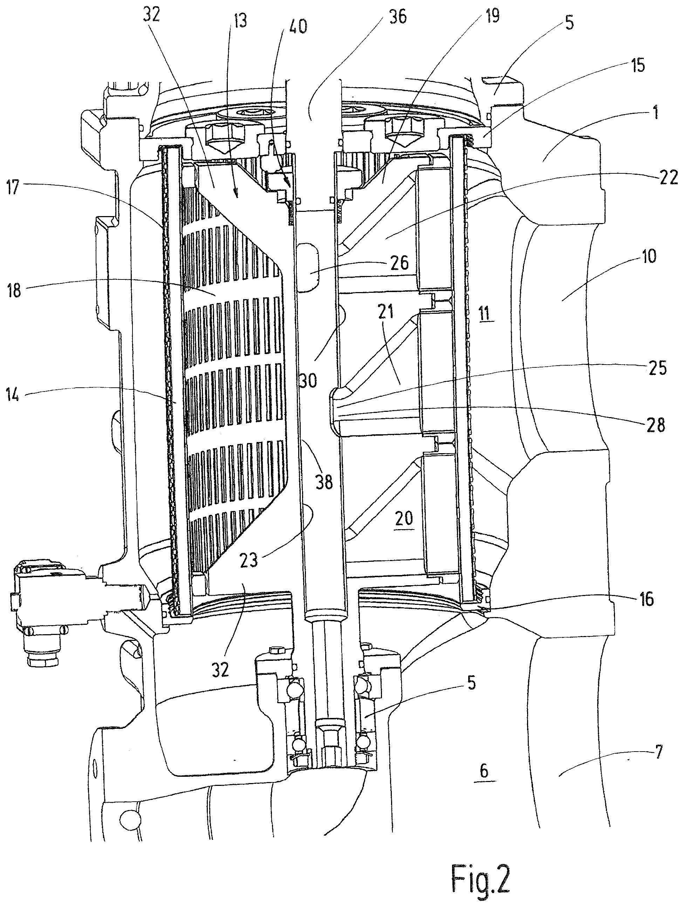

Durch die angesprochene Segmentierung der sich jeweils in Rückspülung befindlichen Filterfläche des Filters 14 wird die Rückspülintensität erhöht und die vorhandene Rückspülenergie wird auf eine kleinere Filterfläche konzentriert. Das hat zum einen zur Folge, dass mit diesem System eine feinere Filtration ermöglicht wird und zum anderen dieses System mit weniger Rückspülmenge arbeiten kann. Die angesprochene Segmentierung für den Filter 14 wird zum einen dadurch realisiert, dass der Spülarm 30 aufgrund seiner verschiedenen Durchlassstellen 27, 28 und 29 mehrere voneinander getrennte Strömungskanäle aufweist, wobei zum anderen ferner vorgesehen ist, dass im Inneren des Spülarms 30 sich das Schaltrohr 38 befindet, welches über den Umfang radial versetzt Abführöffnungen 24, 25 und 26 aufweist, wobei durch einen gezielten relativen Winkelversatz des Schaltrohres 38 zum Spülarm 30 von 120 Grad die angesprochenen Strömungskanäle des Spülarms 30 nacheinander aktiviert werden. So zeigt Fig. 2 einen Zustand, in dem das mittlere Segment des Filters 14 für die Rückspülung aktiviert ist, mit der Folge, dass die mittlere, innen liegende Abfuhröffnung 25 in fluiddurchlässiger Deckung mit der außen liegenden Durchlassstelle 28 ist. Die sonstigen Abfuhröffnungen und Durchlassstellen sind dann wieder für einen Fluiddurchlass durch die Wandteile von Spülarm 30 und Schaltrohr 38 voneinander getrennt.

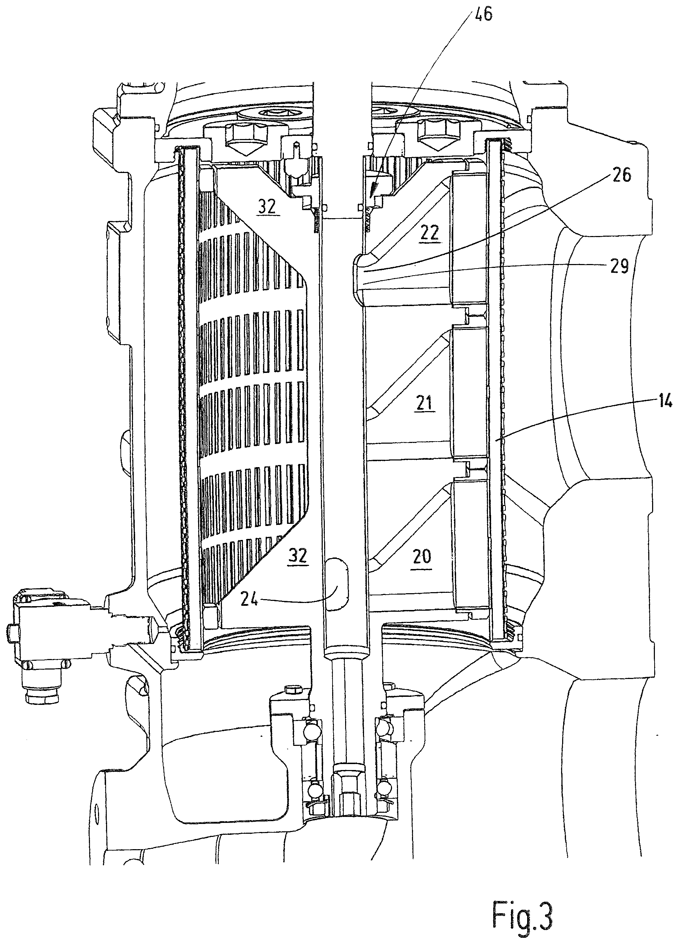

Fig. 3 zeigt nun wiederum die Aktivierung des oberen Segmentes des Filters 14, bei dem die obere Abfuhröffnung 26 der Abfuhreinrichtung 23 in fluiddurchlässiger Stellung mit der oberen Durchlassstelle 29 der Abreinigungseinrichtung 19 ist. Um diesen gezielten relativen Winkelversatz des Schaltrohres 38 zum Spülarm 30 von jeweils 120 Grad herstellen zu können, sprich die einzelnen Segmente des Filters 14 nacheinander zu aktivieren, ist der mechanische Umschaltvorgang innerhalb der Rückspüleinheit 13 mittels der Steuereinrichtung 40 unter Einsatz der Klauenkupplung 50 erforderlich, wobei die Bogensegmente 66 der Mulde 64 mit dem horizontal verlaufenden Bogensegment 68 von der Bahnlänge derart bemessen sind, dass in Zusammenwirken mit dem Druckstück 62 die Schaltzyklen von je 120 Grad Winkelversatz von Abfuhröffnungen 24, 25 und 26 zu Durchlassstellen 27, 28 und 29 erreicht ist.

In dem vorstehend beschriebenen Ausführungsbeispiel ist das obere Gegenlager zur Schaltbuchse 46 eine Kugelrolle, die im Filterkorb 14 angeordnet ist. Das Gegenlager kann aber auch durch andere Komponenten gebildet sein, beispielsweise durch einen Nocken, einen Stift oder dergleichen mehr. Ebenso kann das Gegenlager auch an anderen feststehenden Komponenten im Filter angeordnet werden, zum Beispiel anstelle an der oberen Endkappe 15 direkt am Filtergehäuse 1. Das Konzept des Umschaltmechanismus kann auch durch andere Formen von schaltbaren Kupplungen realisiert sein, beispielsweise unter Einsatz einer Reibungskupplung, einer Magnetkupplung etc. Bei nur zwei Teilreinigungseinheiten ist der Winkelversatz 180 Grad, bei vier Teilreinigungseinheiten 90 Grad und so weiter.

## Patentansprüche

1. Filtervorrichtung, zumindest bestehend aus
- einem Filter (14), der in einzelne Filtersegmente unterteilt ist;
- einer Abreinigungseinrichtung (19), die jedem Filtersegment zugeordnet eine entlang desselben verfahrbare Teilreinigungseinheit (20, 21, 22) aufweist, die mit einer drehbaren Abfuhreinrichtung (23) mit einzelnen Abfuhröffnungen (24, 25, 26) zusammenwirkt, die mit Durchlassstellen (27, 28, 29) in der Abreinigungseinrichtung (19) in zumindest teilweise Überdeckung gebracht der Abfuhr eines Fluidstroms aus dem Filter (14) dient; und
- einer Steuereinrichtung (40), die zumindest eine Teilreinigungseinheit für die Abreinigung aktiviert, wohingegen mindestens eine weitere Teilreinigungseinheit im Rahmen dieser Abreinigung inaktiv bleibt,
**dadurch gekennzeichnet, dass** die Steuereinrichtung (40) eine Kupplungseinrichtung (42) aufweist, durch die in einer Stellung der Kupplungseinrichtung (42) die Abreinigungseinrichtung (19) und die Abfuhreinrichtung (23) für eine gemeinsame Drehbewegung miteinander verbindbar und in einer anderen Stellung der Kupplungseinrichtung (42) voneinander trennbar sind.

2. Filtervorrichtung nach Anspruch 1, **dadurch gekennzeichnet, dass** die Kupplungseinrichtung (42) als ein Steuerteil eine Klauenkupplung (50) aufweist, deren Klauen in gekuppelter Stellung mit Ausnehmungen in der Abreinigungseinrichtung (19) in Eingriff sind und in der ausgekuppelten Stellung außer Eingriff gebracht sind.

3. Filtervorrichtung nach Anspruch 1 oder 2, **dadurch gekennzeichnet, dass** die Steuereinrichtung (40) ein weiteres Steuerteil aufweist, das Bestandteil der Abfuhreinrichtung (23) ist und das derart mit einer Steuerbahn der Kupplungseinrichtung (42) zusammenwirkt, dass bei einer Drehbewegung der Abfuhreinrichtung (23) die Kupplungseinrichtung (42) in die ausgekuppelte Stellung kommt, indem sie von der Abreinigungseinrichtung (19) in eine abgehobene Stellung gebracht ist.

4. Filtervorrichtung nach Anspruch 3, **dadurch gekennzeichnet, dass** die Verfahrbewegung der Kupplungseinrichtung (42) in die abgehobene Stellung von einem Energiespeicher (48) unterstützt ist.

5. Filtervorrichtung nach einem der vorstehenden Ansprüche, **dadurch gekennzeichnet, dass** die Teilreinigungseinheiten (20, 21, 22) in einer Längsachse (4) der Abreinigungseinrichtung (19) übereinander angeordnet sind, die mit ihrem einen freien Ende entlang den Filtersegmenten verfahrbar sind und mit ihrem anderen freien Ende jeweils in die zugeordneten Durchlassstellen (27, 28, 29) der zumindest teilweise als Hohlrohr konzipierten Abreinigungseinrichtung (19) ausmünden.

6. Filtervorrichtung nach Anspruch 5, **dadurch gekennzeichnet, dass** in dem Hohlrohr der Abreinigungseinrichtung (19) ein weiteres Hohlrohr (38) als Teil der Abfuhreinrichtung (23) geführt ist, deren Abfuhröffnungen (24, 25, 26) über den Umfang des weiteren Hohlrohres (38) derart verteilt sind, dass in Hintereinanderabfolge jeweils eine Durchlassstelle (27, 28, 29) mit einer Abfuhröffnung (24, 25, 26) unter Bildung eines Fluiddurchlasses in Deckung gebracht ist, wohingegen die weiteren möglichen Fluiddurchlässe zumindest teilweise, vorzugsweise alle, abgesperrt sind.

7. Filtervorrichtung nach einem der Ansprüche 3 bis 6, **dadurch gekennzeichnet, dass** die Steuerbahn der Kupplungseinrichtung (42) zur Ansteuerung der Teilreinigungseinheiten (20, 21, 22) in einzelne Bahnsegmente (66, 68) unterteilt ist, so dass im gekuppelten Zustand immer zumindest ein Fluiddurchlass aktiviert und nach Durchlaufen eines Entkupplungs-Kupplungs-Zyklus zumindest ein anderer Fluiddurchlass aktiviert ist und die jeweils weiteren Fluiddurchlässe deaktiviert sind.

8. Filtervorrichtung nach einem der vorstehenden Ansprüche, **dadurch gekennzeichnet, dass** die Steuereinrichtung (40) ein weiteres drittes Steuerteil aufweist, das als Druckstück (62) ausgebildet entgegen der Wirkung des Energiespeichers (48) die Kupplungseinrichtung (42) in ihrer gekuppelten Stellung hält und mit mindestens einem Bahnsegment (64) der Kupplungseinrichtung (42) derart zusammenwirkt, dass entlang eines Bogensegmentes (66) das Druckstück (62) außer Funktion gesetzt den Entkupplungsvorgang ermöglicht.

9. Filtervorrichtung nach Anspruch 8, **dadurch gekennzeichnet, dass** die Länge des im Eingriff mit dem Druckstück (62) befindlichen Bogensegmentes (68) derart bemessen ist, dass im gekuppelten Zustand der Kupplungseinrichtung (42) der in der Abreinigungsfolge vorgesehene Fluiddurchlass zwischen der Abreinigungseinrichtung (19) und der Abfuhreinrichtung (23) zustande kommt.

10. Filtervorrichtung nach einem der vorstehenden Ansprüche, **dadurch gekennzeichnet, dass** es bei einem Umschaltvorgang zwischen ge- und entkuppeltem Zustand der Kupplungseinrichtung (42) zu einer Relativbewegung zwischen Abreinigungs- (19) und Abfuhreinrichtung (23) kommt.

## Claims

1. Filter device, at least consisting of
- a filter (14), which is divided into individual filter segments;
- a cleaning apparatus (19), which comprises, associated with each filter segment, a partial cleaning unit (20, 21, 22) which can be moved along said filter segment and which cooperates with a rotatable discharge apparatus (23) having individual discharge openings (24, 25, 26), which, when brought into at least partial alignment with passage points (27, 28, 29) in the cleaning apparatus (19), serves to discharge a fluid flow from the filter (14), and
- a control apparatus (40), which activates at least one partial cleaning unit for cleaning, whereas at least one further partial cleaning unit remains inactive during this cleaning,
**characterised in that** the control apparatus (40) has a coupling apparatus (42), by means of which, in one position of the coupling apparatus (42), the cleaning apparatus (19) and the discharge apparatus (23) can be connected to one another for a common rotary movement and, in another position of the coupling apparatus (42), they can be separated from one another.

2. Filter device according to claim 1, **characterised in that**, as a control part, the coupling apparatus (42) comprises a claw coupling (50), the claws of which are engaged with recesses in the cleaning apparatus (19) in the coupled position and are disengaged in the uncoupled position.

3. Filter device according to either claim 1 or claim 2, **characterised in that** the control apparatus (40) comprises a further control part, which is a component part of the discharge apparatus (23) and which cooperates with a control path of the coupling apparatus (42) in such a manner that, during a rotary movement of the discharge apparatus (23), the coupling apparatus (42) comes into the disengaged position by being brought into a raised position by the cleaning apparatus (19).

4. Filter device according to claim 3, **characterised in that** the displacement movement of the coupling apparatus (42) into the raised position is supported by an energy accumulator (48).

5. Filter device according to any of the preceding claims, **characterised in that** the partial cleaning units (20, 21, 22) are arranged one above the other in a longitudinal axis (4) of the cleaning apparatus (19), said units being able to be moved with their one free end along the filter segments and opening out with their other free end into the respectively assigned passage points (27, 28, 29) of the cleaning apparatus (19), which is designed at least partially as a hollow tube.

6. Filter device according to claim 5, **characterised in that** a further hollow tube (38) is guided in the hollow tube of the cleaning apparatus (19) as part of the discharge apparatus (23), the discharge openings (24, 25, 26) of which are distributed over the circumference of the further hollow tube (38) in such a manner that one passage point (27, 28, 29) in each case is brought in succession into alignment with a discharge opening (24, 25, 26) to form a fluid passage, whereas at least some, preferably all of the further possible fluid passages are blocked.

7. Filter device according to any of claims 3 to 6, **characterised in that** the control path of the coupling apparatus (42) is divided into individual path segments (66, 68) to actuate the partial cleaning units (20, 21, 22) so that, in the coupled state, at least one fluid passage is always activated and, after passing through an uncouplingcoupling cycle, at least one other fluid passage is activated and the respective further fluid passages are deactivated.

8. Filter device according to any of the preceding claims, **characterised in that** the control apparatus (40) comprises a further third control part which is configured as a thrust piece (62) and holds the coupling apparatus (42) in its coupled position against the action of the energy accumulator (48) and cooperates with at least one path segment (64) of the coupling apparatus (42) in such a manner that the thrust piece (62) is rendered inoperable along a curved segment (66) and enables the uncoupling operation.

9. Filter device according to claim 8, **characterised in that** the length of the curved segment (68) in engagement with the thrust piece (62) is dimensioned in such a manner that, when the coupling apparatus (42) is in the coupled state, the fluid passage provided in the cleaning sequence materialises between the cleaning apparatus (19) and the discharge apparatus (23).

10. Filter device according to any of the preceding claims, **characterised in that**, during a switching operation between the coupled and uncoupled state of the coupling apparatus (42), a relative movement occurs between the cleaning apparatus (19) and the discharge apparatus (23).

## Revendications

1. Appareil de filtration, au moins constitué
- d'un filtre (14), qui est subdivisé en des segments individuels de filtre ;
- d'un dispositif (19) de nettoyage, qui a, associé à chaque segment de filtre, une unité (20, 21, 22) partielle de nettoyage pouvant se déplacer le long de celui-ci et qui coopère avec un dispositif (23) tournant d'évacuation ayant des ouvertures (24, 25, 26) individuelles d'évacuation, lequel, mis en recouvrement au moins en partie avec des points (27, 28, 29) de passage dans le dispositif (19) d'évacuation, sert à l'évacuation d'un courant fluidique du filtre (14) ; et
- d'un dispositif (40) de commande, qui active pour le nettoyage au moins une unité partielle de nettoyage, tandis qu'au moins une autre unité partielle de nettoyage reste inactive dans le cadre de ce nettoyage,
**caractérisé en ce que** le dispositif (40) de commande a un dispositif (42) d'accouplement, par lequel, dans une position du dispositif (42) d'accouplement, le dispositif (19) de nettoyage et le dispositif (23) d'évacuation peuvent être assemblés l'un à l'autre pour un mouvement commun de rotation et, dans une autre position du dispositif (42) d'accouplement, peuvent être séparés l'un de l'autre.

2. Appareil de filtration suivant la revendication 1, **caractérisé en ce que** le dispositif (42) d'accouplement a comme partie de commande un accouplement (50) à griffes, dont les griffes sont en prise avec des évidements dans le dispositif (19) de nettoyage et, dans la position désaccouplée, sont mises hors de prise.

3. Appareil de filtration suivant la revendication 1 ou 2, **caractérisé en ce que** le dispositif (40) de commande a une autre partie de commande, qui fait partie du dispositif (23) d'évacuation et qui coopère de telle façon avec une voie de commande du dispositif (42) d'accouplement, que, lors d'un mouvement en rotation du dispositif (23) d'évacuation, le dispositif (42) d'accouplement vient dans la position désaccouplée en étant mis dans une position soulevée du dispositif (19) de nettoyage.

4. Appareil de filtration suivant la revendication 3, **caractérisé en ce que** le mouvement de déplacement du dispositif (42) d'accouplement dans la position soulevée est appuyé par l'accumulateur (48) d'énergie.

5. Appareil de filtration suivant l'une des revendications précédentes, **caractérisé en ce que** les unités (20, 21, 22) partielles de nettoyage sont disposées suivant un axe (4) longitudinal du dispositif (19) de nettoyage les unes sur les autres en ayant leur une extrémité libre déplaçable le long des segments de filtre et leur autre extrémité libre débouchant respectivement dans les points (27, 28, 29) de passage associés du dispositif (19) de nettoyage conçu au moins en partie sous la forme d'un tuyau creux.

6. Appareil de filtration suivant la revendication 5, **caractérisé en ce que** dans le tuyau creux du dispositif (19) de nettoyage passe un autre tuyau (38) creux comme partie du dispositif (23) d'évacuation, dont les ouvertures (24, 25, 26) d'évacuation sont réparties sur le pourtour de l'autre tuyau (38) creux de manière à ce que, successivement, l'un derrière l'autre respectivement, un point (27, 28, 29) de passage est mis en recouvrement avec une ouverture (24, 25, 26) d'évacuation avec formation d'un passage pour du fluide, tandis que les autres passages possibles pour du fluide sont au moins en partie, de préférence tous, fermés.

7. Appareil de filtration suivant l'une des revendications 3 à 6, **caractérisé en ce que** la voie de commande du dispositif (42) d'accouplement est, pour la commande des unités (20, 21, 22) partielles de nettoyage, subdivisée en segments (66, 68) individuels de voie, de sorte que, dans l'état accouplé, toujours au moins un passage pour du fluide soit activé et, après écoulement d'un cycle désaccouplement-accouplement, au moins un autre passage pour du fluide est activé et les autres passages pour du fluide sont respectivement désactivés.

8. Appareil de filtration suivant l'une des revendications précédentes, **caractérisé en ce que** le dispositif (40) de commande a une troisième autre partie de commande, qui, constituée comme pièce (62) de pression antagoniste de l'effet de l'accumulateur (48) d'énergie, maintient le dispositif (42) d'accouplement dans sa position accouplée et coopère avec au moins un autre segment (64) de voie du dispositif (42) d'accouplement, de manière à ce que le long d'un segment (66) arqué, la pièce (62) de pression permette de mettre hors fonction l'opération de désaccouplement.

9. Appareil de filtration suivant la revendication 8, **caractérisé en ce que** la longueur du segment (68) arqué se trouvant en prise avec la pièce (62) de pression est proportionnée, de manière à ce que, dans l'état accouplé du dispositif (42) d'accouplement, le passage pour du fluide prévu dans la séquence de nettoyage vienne entre le dispositif (19) de nettoyage et le dispositif (23) d'évacuation.

10. Appareil de filtration suivant l'une des revendications précédentes, **caractérisé en ce qu'**il se produit, lors d'une opération de commutation entre l'état accouplé et découplé du dispositif (42) d'accouplement, un mouvement relatif entre le dispositif (19) de nettoyage et le dispositif (23) d'évacuation.
